# EUROPEAN PATENT SPECIFICATION

(11) **EP 1 221 231 B1**
(45) Date of publication and mention of the grant of the patent: **06.09.2006**
(21) Application number: 00948969.1
(22) Date of filing: 26.07.2000
(51) Int. Cl.: H04L 12/64

(54) **METHOD AND APPARATUS FOR SUPPORTING NON-VOICE SIGNAL SUCH AS FAX AND COMPRESSED VOICE OVER A DIGITAL WIRELESS LINK**
VERFAHREN UND VORRICHTUNG ZUR ÜBERTRAGUNG VON NICHT-SPRACHLICHEN SIGNALEN WIE FAXSIGNALEN UND KOMPRIMIERTE SPRACHSIGNALEN ÜBER EINER DRAHTLOSEN DIGITALVERBINDUNG
PROCEDE ET APPAREIL DESTINES A SUPPORTER UN SIGNAL NON VOCAL, TEL QUE CELUI D'UN FAC-SIMILE, AINSI QU'UNE VOIX COMPRIMEE SUR UNE LIAISON SANS FIL NUMERIQUE

(30) Priority: 26.07.1999 US 145691 P; 22.12.1999 US 470462
(43) Date of publication of application: 10.07.2002
(73) Proprietor: Thomson Licensing, 92100 Boulogne-Billancourt (FR)
(72) Inventor: RAMASWAMY, Kumar, Plainsboro, NJ 08536 (US); KNUTSON, Paul, Gothard, Lawrenceville, NJ 08648 (US); RAMEY, Blaine, Edward, Indianapolis, IN 46220 (US)
(74) Representative: Heuer, Wilhelm
(86) International application number: PCT/US2000/020355
(87) International publication number: WO 2001/024464

(56) References cited:
- EP-A- 0 714 186
- US-A- 5 463 626
- US-A- 5 768 350

## Description

### FIELD OF THE INVENTION

The present invention generally relates to data transmission systems. More particularly, the invention relates to a method and apparatus for sending non-voice data such as, for example, facsimile data as well as compressed voice signals over a digital wireless link.

### BACKGROUND OF THE INVENTION

There are many types of data communication systems in the art for transmitting facsimile, audio, video and data signals. In addition, cordless telephone systems have become enormously popular, offering flexibility and convenience unequaled by traditional corded telephone systems.

Cordless telephone systems use digital signal processing for processing voice signals prior to transmission. Once the voice signal is digitized, a cordless telephone system compresses the digitized voice signal using a voice compression algorithm or technique that is based on a speech model. To conserve bandwidth over the digital wireless link (or RF link) and maintain a reasonable speech quality, the compression algorithm operates at compression ratios between two and ten.

As cordless telephone systems are enormously popular, it is desirable to incorporate additional features in these systems, such as coupling facsimile machines to a cordless handset or producing a cordless facsimile machine. However, facsimile machines do not process data using a speech model as is used in cordless telephone systems. If a speech model that is applied to the voice compression algorithm used in existing cordless telephone systems were to be applied to facsimile data, the facsimile data would become distorted.

Data communications systems that combine voice and data, such as facsimile, are known in the art. Davis at al, in U.S. Patent No. 6,764,628 and Davis et al, in U.S. Patent No. 5,812,534 are two examples of such systems. However, these systems require dedicated lines or channels to separately transmit voice and facsimile data and are not applicable to cordless telephone systems.

US 5 768 350 A discloses the transferring of voice and data from one location to another over a single telephone line. Data and voice frames are transmitted on a single channel using different headers to permit routing.

US 5 463 626 A Is concerned with the interleaving of non-paging-data with a paging signal in a same data stream.

Therefore, a need exists in the art for combining the wireless transmission of non-voice data such as facsimile signals with the wireless transmission of compressed voice signals in cordless telephone systems.

### SUMMARY OF THE INVENTION

The invention overcomes the disadvantages associated with the prior art by providing a method and apparatus for transmitting non-voice data such as facsimile signals over the same wireless or radio frequency (RF) link used for transmitting compressed voice signals. The invention segments a facsimile signal into a format that is similar to a compressed voice signal. The segmented portions of the facsimile signal are separately transmitted through the wireless link. As such, the invention may transmit facsimile and/or compressed voice signals over a wireless link without distortion.

Specifically, the inventive apparatus comprises a base station and a remote station. The base station comprises a signal converter for converting facsimile and compressed voice signals from a telephone network respectively into a converted facsimile signal and a converted voice signal, a voice processor coupled to the signal converter for compressing the converted voice signal, a data splitter coupled to the signal converter for segmenting the converted facsimile signal, and a modem coupled to the voice compressor and the data splitter for transmitting the converted voice and facsimile signals via a wireless link to the remote station. The remote station receives these signals from the base station, and converts voice and facsimile signals in a reverse manner to that of the base station, i.e., the segmented facsimile signals are combined into a digital facsimile signal, the digital facsimile signal and the compressed voice signal are processed to form analog voice and facsimile signals. As such, the remote station may be or may contain a wireless facsimile machine and/or a cordless telephone handset having a facsimile machine connected thereto. The base station and remote station contain complementary circuitry that provides full duplex facsimile and voice communications over the wireless link.

### BRIEF DESCRIPTION OF THE DRAWINGS

The teachings of the present invention can be readily understood by considering the following detailed description in conjunction with the accompanying drawings, in which:
FIG. 1 depicts a system level block diagram of an end-to-end system comprising a base station and a receiving station;
FIG. 2 depicts a high level block diagram of a base station adapted to communicate with an analog telephone network;
FIG. 3 depicts a high level block diagram of a base station adapted to communicate with a digital telephone network;
FIG. 4 depicts a high level block diagram of a remote station suitable for use with either of the base stations of FIG. 2 and FIG. 3; and
FIG. 5 depicts a high level block diagram of a base station adapted to communicate with a digital telephone network using a single voice compression/decompression technique.

To facilitate understanding of the invention, identical reference numerals have been used, where possible, to designate identical elements that are common to the figures.

### DETAILED DESCRIPTION

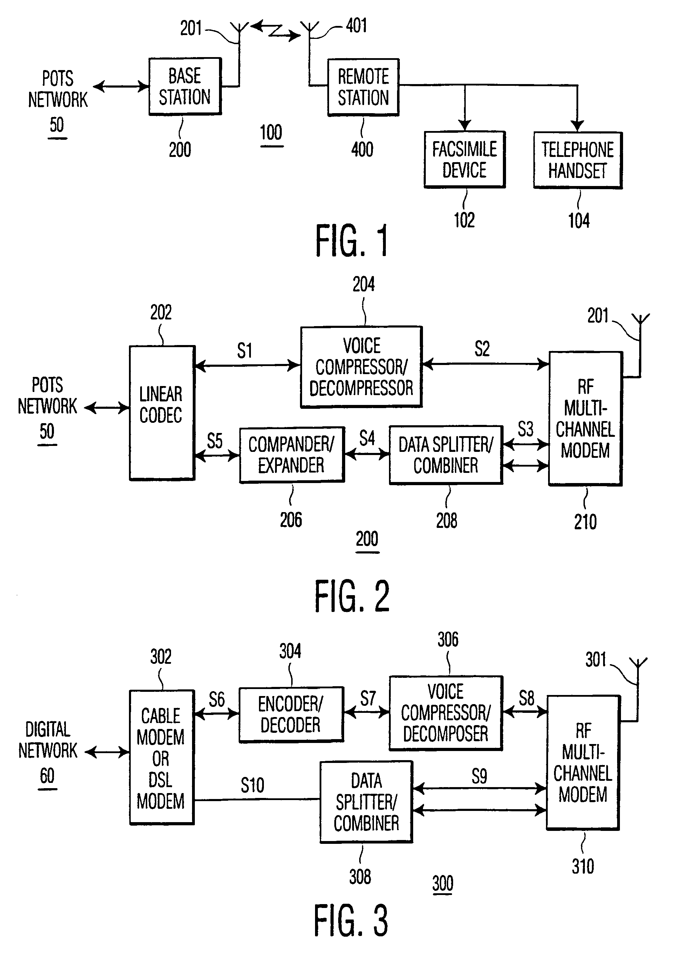

FIG. 1 depicts a system level block diagram of an end-to-end system 100 for providing facsimile transmission and compressed voice transmissions through a wireless link. The end-to-end system 100 comprises a base station 200 and the remote station 400 that communicate with one another in a full duplex manner. The base station 200 receives facsimile or voice signals from, illustratively, a Plain Old Telephone System (POTS) 50 and processes the facsimile or voice signal for transmission to the wireless link via an antenna 201. The remote station 400 receives the transmitted facsimile or voice signal via an antenna 401. To receive facsimile output at the remote station 400, a facsimile device 102 or facsimile machine is coupled to the remote station 400. Additionally, to receive a voice transmission at the remote station 400, a telephone handset 104 is provided.

Other variations of the end-to-end system 100 include having the facsimile device 102 embedded within the remote station 400. Also, the handset 104 may be connected to the remote station 400. Other base stations 200 and 400 for receiving facsimile and voice data from a digital network are possible. Those skilled in the art will recognize that other variations of the end-to-end station 100 are also contemplated to be within the scope of the invention.

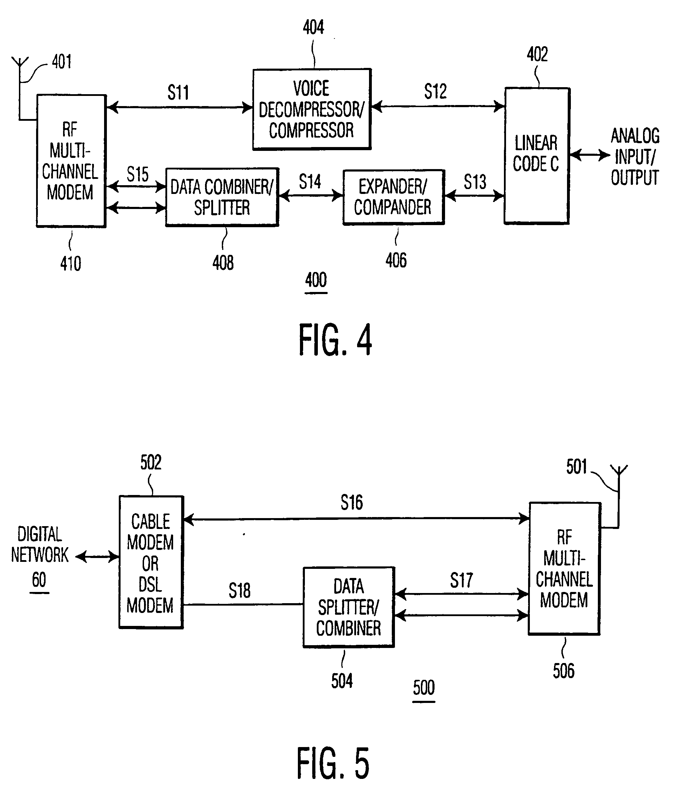

FIG. 2 depicts a high level block diagram of the base station 200 that is adapted to communicate with an analog telephone network such as the ubiquitous POTS network 50. The base station 200 may operate as a transmitter and/or as a receiver. In a transmitter mode of operation, the base station 200 receives voice and/or facsimile data from the POTS network 50, processes the received POTS data, and transmits the processed POTS data to a remote station 400 via a wireless link. Alternatively, in a receiver mode of operation, the base station 200 receives voice and/or facsimile data from the remote station 400 via the wireless link, processes the received facsimile and voice data and couples the processed data to the POTS network 50. The operation of the remote station 400 will be described in more detail below with respect to FIG. 4.

Specifically, the base station 200 of FIG. 2 comprises a linear codec 202, a voice compressor/decompressor 204, a facsimile compander/ expander 206, a facsimile data splitter/ combiner 208, a radio frequency (RF) multi-channel modem 210 and an antenna 201. As the base station 200 may transmit and receive facsimile and compressed voice signals from the digital wireless link, the signal paths between base station 200 components are shown with bi-directional arrows to illustrate complementary functions. For example, the modem 210 modulates signals produced by the voice compressor/decompressor 204 and by the data splitter/combiner 208 for RF transmission via the antenna 201. The modem 210 also demodulates a RF signal received by the antenna 201. Other components within the base station 200 may also operate in receive and transmit modes, as will now be discussed.

Referring to FIG. 2, the linear codec or linear coder-decoder 202 receives either facsimile or voice signal from a POTS network 50. Unless the POTS network 50 is specifically programmed to simultaneously transmit facsimile and compressed voice signals on a single telephone line to the codec 202, the POTS network 50 generally propagates only one type of signal at any one time. The linear codec 202 samples either the received facsimile or compressed voice signals at, illustratively, an 8 kHz sampling rate using a 14-bit analog to digital converter (ADC). The linear codec 202 operates as a signal converter that converts the received signals into digital form. The converted signals are coupled to the voice compressor/ decompressor 204 via signal path S1 and coupled to the compander/ expander 206 via signal path S5. Signal paths S1 and S5 convey, illustratively, 112 kilobits per second (Kbps) digital data streams.

The voice compressor/decompressor 204 compresses the converted voice data according to, illustratively, the G.727 standard (International Telecommunications Union Recommendation G.727) to produce a compressed voice signal, illustratively a 32 Kbps data stream, that is coupled to the modem 210 via signal path S2. The voice compressor/ decompressor 204 operates as a voice signal processor.

The compander 206 compands the converted facsimile data according to, illustratively, the G.711 standard (International Telecommunications Union Recommendation G.711) to produce a 64 Kbps data stream that is coupled to the data splitter 208 via signal path S4.

The data splitter 208 or signal segmenter splits or segments the companded 64 Kbps facsimile data stream into two 32 Kbps data streams or segments that are coupled to the RF multi-channel modem 210 via signal path S3. As the companded facsimile data is transmitted at twice the data rate than compressed voice data, thereby requiring twice the bandwidth as compressed voice data, the data splitter 208 segments the companded facsimile data into a format suitable for transmitting compressed voice data. Specifically, the signal segmenter segments a facsimile signal into a plurality of segmented facsimile signals, where each segmented facsimile signal occupies a bandwidth that is less than or equal to a bandwidth of the compressed voice signal. Although segmentation may occur at the bit level (e.g., every other bit), byte level or packet level, other implementations are contemplated within the scope of the invention.

Since facsimile data requires approximately twice the bandwidth of voice data, the base station 200 must allocate additional bandwidth for transmitting the facsimile data over the wireless link. The bandwidth allocation depends on whether the base station 200 uses time division multiplexing (TDM) or frequency division multiplexing (FDM) for transmitting facsimile and voice data over the wireless link. If the base station 200 uses TDM, then the base station 200 allocates a greater number of time slots for facsimile data (e.g., twice the number allocated for voice data). Alternatively, if the base station 200 uses FDM, then the base station 200 allocates a greater number of frequency bands or codes for facsimile data (i.e., twice the number allocated for voice data). To simplify the allocation of twice as many time or frequency bands to facsimile data as to voice data, the facsimile data is split into two data streams. Thus, by allocating the same number of time or frequency bands to each of the voice data stream, first facsimile data stream and second facsimile data stream, the facsimile data will inherently receive twice the time or frequency band allocation.

It will be appreciated by those skilled in the art that other divisions of data (e.g., a factor of three or four) may be effected to further increase the bandwidth allocation to the facsimile data. Additionally, the base station 200 may use other multiplexing techniques, such as code division multiplexing (CDM), for transmitting facsimile and voice data streams

The modem 210 modulates the compressed voice signal as well as the previously split or segmented facsimile signal for transmission over the wireless link. The modem 210 may modulate these signals using FDM, TDM or CDM. The modulated voice and facsimile signals are transmitted to the wireless link via the antenna 201.

The base station 200 in FIG. 2 may also receive modulated facsimile and cordless voice signals from the remote station via the wireless link. In the receive mode of operation, the modem 210 receives the RF modulated facsimile and/or voice signals from the remote station and demodulates these signals. The demodulated signals are coupled to the voice decompressor 204 via signal path S2 and to the data combiner 208 via signal path S3.

The decompressor 204 decompresses the demodulated voice signal while the data combiner 208 combines the demodulated facsimile signals. These functions are the reverse of that previously discussed for the base station 200 in the transmitter mode. The decompressed voice signal is coupled with the linear codec 202 via signal path S1 while the combined facsimile data is coupled with the expander 206 via signal path S4. The expander 206 expands the combined signal, which is also coupled to the linear codec 202 via signal path S5. The codec 202 operates in the receiver mode as a 14-bit digital to analog converter (DAC) to convert the decompressed voice signal and expanded facsimile signal to analog inputs into the POTS network 50.

FIG. 3 depicts a high level block diagram of a base station 300 that is adapted to communicate with a digital telephone network 60. In contrast to the POTS network 50, the digital telephone network 60 may simultaneously transmit facsimile and compressed voice signals. As such, the base station 300 may also simultaneously receive and/or transmit facsimile and compressed voice signals. The base station 300, as with the base station of FIG. 2, operates as a transceiver having a transmitter mode and a receiver mode.

The base station 300 of FIG. 3 includes a cable modem or digital subscriber line (DSL) modem 302, an encoder/decoder 304, a voice compressor 306, a data splitter/combiner 308, a RF multi-channel modem 310 and an antenna 301. These components also operate in a bi-directional, full duplex manner, such as previously described with respect to the components of the base station 200 of FIG. 2.

The cable modem or DSL modem 302 receives facsimile and voice signals from the digital telephone network 60 through, illustratively, a coaxial cable or twisted wire pair medium. The modem or signal converter 302 decodes the received signals and couples the decoded signals to the encoder/decoder 304 via signal path S6 and to the data splitter 308 via signal path S10.

Unlike base station 200 of FIG. 2, the voice signal processor in this embodiment of the base station 300 either compresses or decompresses the decoded voice data in two distinct stages. First, the encoder/decoder 304 decodes the voice signal received from the digital network 60. Then the voice compressor/decompressor 306 compresses the decoded voice data and couples the decompressed and decoded voice data to the modem 310. The encoder/decoder 304 and compressor/decompressor 306 combination operates as a voice processor.

The encoder/decoder 304 operates as either a compressor/ decompressor or as a compander/expander. If the received voice data has been subjected to compression, then the encoder/decoder 304 operates to decompress the received voice data. Similarly, if the received voice data has been subjected to companding, then the encoder/decoder 304 operates to expand the received voice data. The resulting decompressed or expanded voice signal is coupled to the voice compressor 306 via signal path S7.

The compressor 306 compresses the previously decompressed or expanded voice data and couples the compressed voice data to the RF multi-channel modem 310 via signal path S8.

The data splitter 308 or signal segmenter receives the decoded facsimile data stream, illustratively, 64 Kbps, from the modem 302, and splits or segments the decoded facsimile into two 32 Kbps data streams for subsequent transport over the wireless link. Each of the segmented facsimile streams occupies a bandwidth that is less than or equal to a bandwidth of the compressed voice signal. The resulting "split" or segmented facsimile signals are coupled to the RF multi-channel modem 310 via signal path S9. Note that this embodiment of the base station 300 does not include a compander/expander, as the facsimile data is generally received from the digital network 60 in a companded state.

The modem 310 modulates the compressed voice signal received via signal path S8 and the split or segmented facsimile signal received via signal path S9 in substantially the same manner as described above with respect to the modem 210 of FIG. 2. The antenna 301 transmits the modulated voice and facsimile signals over the wireless link.

FIG. 4 depicts a high level block diagram of a remote station 400 suitable for use with either of the base stations 200 and 300 depicted, respectively, in FIG. 2 and FIG. 3. As such, the remote station 400 may receive facsimile and voice signals previously transmitted by the base station 200 or 300 over the wireless link. The block diagram for the remote station 400 includes substantially the same components as the block diagram for the base station 200 shown in FIG. 2.

As with the base stations 200 and 300, the remote station 400 operates as a transceiver having both a receive mode and a transmit mode. In a receive mode of operation, the remote station 400 receives voice and/or facsimile data from a base station 200 or 300, processes the received data and provides the processed data at an analog input/output port for subsequent use by a facsimile machine, answering machine or person. In a transmit mode of operation, the remote station 400 receives voice and/or facsimile signal via the input/output port, processes the received signal and couples the processed signal to the base station 200 or 300 via RF transmission.

Specifically, the remote station 400 includes a linear codec 402, a voice decompressor/compressor 404, an expander/compander 406, a data combiner/splitter 408, a RF multi-channel modem 410 and an antenna 401. These components are also bi-directional, full duplex, as the remote station 400 will convert data in the reverse direction if applied for transmitting facsimile and compressed voice signals over the wireless link.

The modem 410 receives the transmitted facsimile and voice data signals through the antenna 401. The modem 410 demodulates the received facsimile and voice signals into, illustratively, 32 Kbps signals. The modem 410 couples the demodulated signals to the voice decompressor/compressor 404 via signal path S1 1 and to the data combiner/ expander 408 via signal path S15.

The voice decompressor/compressor 404 decompresses the demodulated voice signal into, illustratively, a 112 Kbps data stream. This decompression is the complementary to the compression performed by the voice compressor 204. The voice decompressor/compressor 404, which operates as a voice processor, couples the decompressed voice signal to the linear codec 402 via signal path S12.

The data combiner/splitter 408 combines at least two 32 Kbps demodulated and previously segmented facsimile signals into a 64 Kbps signal. The data combiner/splitter 408 couples the combined facsimile signal to the expander/compander 406 via signal path S14. The expander/compander 406 expands the combined signals into, illustratively, a 112 Kbps data stream and couples the expanded facsimile signal to the linear codec 402 via signal path S13. The data combiner/ splitter 408 and expander/compander 406 combination operates as a facsimile processor as with the base station 200.

The linear codec 402 operates, illustratively, as a 14-bit digital-to-analog converter (DAC) running at 8 kHz. In this mode, the codec 402 converts the compressed voice signal and expanded facsimile signal into analog signal inputs. As such, one or more remote facsimile machines 102 or telephone handsets 104 can be coupled to the output of the remote station 400.

The remote station 400 may also transmit facsimile and digital cordless voice data signals in the reverse outgoing direction to the wireless link. In this transmit mode, the remote station 400 components operate in the reverse manner to the remote station 400 in the receive mode. The operation of the remote station 400 in the transmit mode is substantially the same as the base station 200 of FIG. 2 in the transmit mode, as voice data is compressed and facsimile data is companded. Specifically, the remote station 400 compresses the voice data signal at, illustratively, 32 Kbps to the wireless link. In the case of facsimile data, the remote station 400 compands, illustratively, at 64 Kbps, to the wireless link, since the facsimile signal uses twice the bandwidth of the voice signal.

FIG. 5 depicts a high level block diagram of a base station 500 adapted to communicate with a digital telephone system or digital network 60 that uses a single voice compression/decompression technique for both the wireless link and the digital network 60. In contrast to the base station 300 shown in FIG. 3, the voice compression techniques are the same for transmission to the wireless link and to the digital network 60. As such, the incoming voice signal to the base station 500 is in a compressed state suitable for transmission over the wireless link. The voice signal compressor for this base station 500 is, in essence, a unity compressor, as there are no separate compression modules for the digital network 60 or the wireless link.

Specifically, the base station 500 includes a Cable or Digital Signal Line (DSL) modem 502, a data splitter/combiner 504, a RF multi-channel modem 506 and an antenna 501. As with the other base stations 200 and 300, the components of this base station 500 are bi-directional depending on whether the base station 500 operates as a transmitter or as a receiver. The base station 500 may also simultaneously transmit facsimile and compressed voice data.

In a receiver mode of operation, the cable modem or DSL modem 502, which operates as a signal converter, decodes the facsimile and compressed voice signals from the digital network 60. The cable modem or DSL modem 502 couples the decoded voice signal to the RF multi-channel modem 506 via signal path S16 and couples the decoded facsimile signal to the data splitter via signal path S18.

The data splitter 504 or signal segmenter splits or segments the decoded facsimile signal into smaller data streams and couples the RF multi-channel modem 506 via signal path S17. Each of the segmented data streams occupies a bandwidth that is less than or equal to a bandwidth for a compressed voice signal. The modem 506 modulates the decoded compressed voice signal and segmented facsimile signal, where the modulated signals are coupled to the wireless link via the antenna 501.

The base station 500 may receive facsimile and compressed voice signals from the wireless link as with the other base stations 200 and 300. The signal conversions are the reverse than of the base station 500 in a receiver mode. In addition, the remote station 400 is suitable for use with this base station 500.

Advantageously, the invention transmits facsimile data over the same wireless link used for transmitting compressed voice data. It is specifically noted that the slotted transmission architecture may be adapted to provide varying bandwidth allocation of the processed facsimile and compressed voice signals. It is also noted that while a single voice channel and a single facsimile channel are depicted, multiple voice and/or facsimile (or other data) channels may be employed within the context of the invention.

The numerical values used herein are only examples. As these values are not intended as being limiting, other values and standards are contemplated to be within the scope of the invention.

Although various embodiments which incorporate the teachings of the present invention have been shown and described in detail herein, those skilled in the art can readily devise many other varied embodiments that still incorporate these teachings.

## Claims

1. A first station (200; 300) for use in a system for wirelessly communicating voice and non-voice signals between the first station (200; 300) and a second station (400), where said first station (200; 300) comprises:
a signal converter (202; 302) coupled to a communications network for converting received signals into digital form;
a voice signal processor (204; 304, 306) coupled to the signal converter (202) for producing a compressed voice signal;
a signal segmenter (208; 308) coupled to said signal converter (202; 302) for segmenting a non-voice signal to form at least two segmented non-voice signals, each having a bandwidth that is less than or equal to a bandwidth of the compressed voice signal;
a modem (210; 310), coupled to said voice processor (204; 304, 306) and said signal segmenter (208; 308), for wirelessly transmitting said compressed voice signal and said at least two segmented non-voice signals to said second station.

2. The station of claim 1 wherein said non-voice signal comprises a facsimile signal.

3. The station of claim 1 wherein said modem (210; 310) receives a compressed voice signal and a plurality of segmented non-voice signals from said second station (400), said voice signal processor (204; 304, 306) decompresses said received compressed voice signal and said signal segmenter (208; 308) combines said received segmented non-voice signals to form a received non-voice signal.

4. The station of claim 1 wherein said signal converter (202) is a linear codec.

5. The station of claim 1 wherein said signal converter (302) is a digital modem.

6. The station of claim 5 wherein said digital modem receives and transmits said compressed voice signal and said segmented non-voice signals simultaneously.

7. The station of claim 6 wherein said voice signal processor (304, 306) and said signal segmenter (308) operate simultaneously.

8. The station of claim 1 wherein said voice signal processor (204; 304, 306) comprises a voice signal compressor (204; 306).

9. The station of claim 1 further comprising a compander (206) coupled to said signal converter (202) and said signal segmenter (208).

10. The station of claim 1 wherein said signal segmenter (208, 308) is a data splitter.

11. A second station (400) for use in a system for wirelessly communicating voice and facsimile signals between a first station (200; 300) and the second station (400), where said second station (400) comprises:
a modem (410) for receiving a compressed voice signal and at least two segmented facsimile signals wirelessly from said first station;
a voice signal processor (404), coupled to said modem (410), for decompressing said compressed voice signal to form a voice signal;
a signal combiner (408), coupled to said modem (410), for combining said at least two segmented facsimile signals to form a facsimile signal, where said facsimile signal has a bandwidth that is greater than a bandwidth of the compressed voice signal; and
a codec (402) for coupling the facsimile signal and the voice signal to at least one user device.

12. The station of claim 11 wherein said voice signal processor (404) compresses a voice signal to form a compressed voice signal and said signal combiner (408) segments a facsimile signal into a plurality of segmented facsimile signals, each having a bandwidth that is less than or equal to a bandwidth of the compressed voice signal.

13. The station of claim 11 wherein said voice signal processor (404) and said signal combiner operate simultaneously.

14. The station of claim 11 wherein said voice signal processor (404) comprises a voice signal decompressor.

15. The station of claim 11 further comprising a compander (406) coupled to said signal converter and said signal combiner (408).

16. The station of claim 11 wherein said signal combiner (408) is a data combiner.

17. The station of claim 11 wherein said user devices comprise a telephone handset and a facsimile machine.

18. A system for wirelessly communicating voice and non-voice signals between a base station (200; 300) and a remote station (400), where said base station (200; 300) comprises:
a signal converter (202; 302) coupled to a communications network that propagates both non-voice and voice signals;
a voice signal processor (204; 304, 306), coupled to said signal converter (202; 302), for producing a compressed voice signal;
a signal segmenter (208, 308) coupled to said signal converter (202; 302), for segmenting a non-voice signal to form at least two segmented non-voice signals, each having a bandwidth that is less than or equal to a bandwidth of the compressed voice signal;
a modem (210, 310), coupled to said voice signal processor (204; 304, 306) and said signal segmenter (208, 308), for wirelessly transmitting said compressed voice signal and said at least two segmented non-voice signals to said remote station (400);
and said remote station (400) comprises:
a modem (410) for receiving a compressed voice signal and the at least two segmented non-voice signals from said base station;
a voice signal processor (404), coupled to said modem, for decompressing said compressed voice signal to form a voice signal;
a signal combiner (408), coupled to said modem, for combining said at least two segmented non-voice signals to form a non-voice signal, where said non-voice signal has a bandwidth that is greater than a bandwidth of the compressed voice signal; and
a codec (402) for coupling the non-voice signal and the voice signal to at least one user device.

19. A method of communicating between a first station and a second station comprising the steps of:
compressing a voice signal to form a compressed voice signal;
processing a non-voice signal to segment said non-voice signal into at least two segmented non-voice signals, each segmented non-voice signal having a bandwidth that is less than or equal to a bandwidth of said compressed voice signal;
wirelessly transmitting said compressed voice signal and said at least two segmented non-voice signals from said first station to said second station within a channel having a bandwidth that is substantially the same as the bandwidth of the compressed voice signal.

20. The method of claim 19 wherein said processing step further comprises the step of companding said non-voice signal.

21. The method of claim 19 wherein said voice and non-voice signals are provided by a communications network.

22. The method of claim 19 wherein said voice and non-voice signals are provided by at least one user device.

23. The method of claim 19 wherein said non-voice signal comprises a facsimile signal.

## Patentansprüche

1. Erste Station (200;300) zur Verwendung in einem System für die schnurlose Kommunikation von Sprach- und Nicht-Sprachsignalen zwischen der ersten Station (290; 300) und einer zweiten Station (400), wobei diese erste Station (200; 300) umfasst:
einen Signalwandler (202; 302), der an ein Kommunikationsnetz gekoppelt ist, um empfangene Signale in digitale Form umzuwandeln;
einen Sprachsignalprozessor (203; 304, 306), der an den Signalwandler (202) gekoppelt ist, um ein komprimiertes Sprachsignal zu erzeugen;
einen Signalsegmentierer (208; 308), der an den Signalwandler (202; 302) gekoppelt ist, um ein Nicht-Sprachsignal zu segmentieren, um wenigstens zwei segmentierte Nicht-Sprachsignale zu erzeugen, von denen jedes eine Bandbreite hat, die kleiner oder gleich einer Bandbreite des komprimierten Sprachsignals ist;
ein Modem (210; 310), das an den Sprachprozessor (204; 304, 306) und den Signalsegmentierer (208; 308) gekoppelt ist, um das komprimierte Sprachsignal und die wenigstens zwei segmentierten Nicht-Sprachsignale an die zweite Station zu übertragen.

2. Station nach Anspruch 1, bei der das Nicht-Sprachsignal ein Telefaxsignal umfasst.

3. Station nach Anspruch 1, bei der das Modem (210; 310) ein komprimiertes Sprachsignal und eine Mehrzahl von segmentierten Nicht-Sprachsignalen von der zweiten Station (400) empfängt, der Sprachsignalprozessor (204; 304, 306) das empfangene komprimierte Sprachsignal dekomprimiert und der Signalsegmentierer (208; 308) die empfangenen segmentierten Nicht-Sprachsignale kombiniert, um ein empfangenes Nicht-Sprachsignal zu erzeugen.

4. Station nach Anspruch 1, bei der der Signalwandler (202) ein linearer Codec ist.

5. Station nach Anspruch 1, bei der der Signalwandler (302) ein digitales Modem ist.

6. Station nach Anspruch 5, bei der das digitale Modem das komprimierte Sprachsignal und die segmentierten Nicht-Sprachsignale gleichzeitig empfängt und überträgt.

7. Station nach Anspruch 6, bei der der Sprachsignalprozessor (304, 306) und der Signalsegmentierer (308) gleichzeitig arbeiten.

8. Station nach Anspruch 1, bei der der Sprachsignalprozessor (204; 304, 306) einen Sprachsignalkompressor (204; 306) umfasst.

9. Station nach Anspruch 1, ferner mit einem an den Signalwandler (202) und den Signalsegmentierer (208) gekoppelten Kompander (206).

10. Station nach Anspruch 1, bei der der Signalsegmentierer (208; 308) ein Datensplitter ist.

11. Zweite Station (400) zur Verwendung in einem System für die schnurlose Übertragung von Sprach- und Telefaxsignalen zwischen einer ersten Station (200; 300) und der zweiten Station (400), wobei die zweite Station (400) umfasst:
ein Modem (410) für den schnurlosen Empfang eines komprimierten Sprachsignals und von wenigstens zwei segmentierten Telefaxsignalen von der ersten Station;
einen Sprachsignalprozessor (404), der an das Modem (410) gekoppelt ist, zum Dekomprimieren des komprimierten Sprachsignals, um ein Sprachsignal zu erzeugen;
einen Signalkombinierer (408), der an das Modem (410) gekoppelt ist, zum Kombinieren der wenigstens zwei segmentierten Telefaxsignale, um ein Telefaxsignal zu erzeugen, wobei das Telefaxsignal eine Bandbreite hat, die größer als eine Bandbreite des komprimierten Sprachsignals ist; und
einen Codec (402) zum Koppeln des Telefaxsignals und des Sprachsignals an wenigstens eine Benutzervorrichtung.

12. Station nach Anspruch 11, bei der der Sprachsignalprozessor (404) ein Sprachsignal komprimiert, um ein komprimiertes Sprachsignal zu erzeugen, und der Signalkombinierer (408) ein Telefaxsignal in eine Mehrzahl von segmentierten Telefaxsignalen segmentiert, von denen jedes eine Bandbreite hat, die kleiner oder gleich einer Bandbreite des komprimierten Sprachsignals ist.

13. Station nach Anspruch 1, bei der der Sprachsignalprozessor (404) und der Signalkombinierer gleichzeitig arbeiten.

14. Station nach Anspruch 11, bei der der Sprachsignalprozessor (404) eine Sprachsignaldekompressor umfasst.

15. Station nach Anspruch 11, ferner mit einem an den Signalwandler und den Signalkombinierer (408) gekoppelten Kompander (406).

16. Station nach Anspruch 11, bei der der Signalkombinerer (408) ein Datenkombinierer ist.

17. Station nach Anspruch 11, bei die Benutzervorrichtungen einen Telefonhörer und ein Telefaxgerät umfassen.

18. System für die schnurlose Übertragung von Sprach- und Nichtsprachsignalen zwischen einer Basisstation (200; 300) und einer entfernten Station (400), wobei die Basisstation (200; 300) umfasst:
einen Signalwandler (202; 302), der an ein Kommunikationsnetz gekoppelt ist, das Sprach- und Nicht-Sprachsignale überträgt;
einen Sprachsignalprozessor (204; 304, 306), der an den Signalwandler (202; 302) zum Erzeugen eines komprimierten Sprachsignals gekoppelt ist;
einen Signalsegmentierer (208; 308) der an den Signalwandler (202; 302) gekoppelt ist, zum Segmentieren eines Nicht-Sprachsignals, um wenigstens zwei segmentierte Nicht-Sprachsignale zu erzeugen, von denen jedes eine Bandbreite hat, die kleiner oder gleich einer Bandbreite des komprimierten Sprachsignals ist;
ein Modem (210; 310), das an den Sprachsignalprozessor (204; 304, 306) und den Signalsegmentierer (208, 308) gekoppelt ist, für die schnurlose Übertragung des komprimierten Sprachsignals und der wenigstens zwei segmentierten Nicht-Sprachsignale an die entfernte Station (400);
und die entfernte Station (400) umfasst:
ein Modem (410) zum Empfangen eines komprimierten Sprachsignals und der wenigstens zwei segmentierten Nicht-Sprachsignale von der Basisstation;
einen Sprachsignalprozessor (404), der an das Modem gekoppelt ist, zum Dekomprimieren des komprimierten Sprachsignals, um ein Sprachsignal zu erzeugen;
einen Signalkombinierer (408), der an das Modem gekoppelt ist, zum Kombinieren der wenigstens zwei segmentierten Nicht-Sprachsignale, um ein Nicht-Sprachsignal zu erzeugen, wobei das Nicht-Sprachsignal eine Bandbreite hat, die größer als eine Bandbreite des komprimierten Sprachsignals ist; und
einen Codec (402) zum Koppeln des Nicht-Sprachsignals und des Sprachsignals an wenigstens eine Benutzervorrichtung.

19. Verfahren zum Kommunizieren zwischen einer ersten Station und einer zweiten Station, mit den Schritten:
Komprimieren eines Sprachsignals, um ein komprimiertes Sprachsignal zu erzeugen;
Verarbeiten eines Nicht-Sprachsignals, um das Nicht-Sprachsignal in wenigstens zwei segmentierte Nicht-Sprachsignale zu segmentieren, wobei jedes segmentierte Nicht-Sprachsignal eine Bandbreite hat, die kleiner oder gleich einer Bandbreite des komprimierten Sprachsignals ist;
Schnurloses Übertragen des komprimierten Sprachsignals und der wenigstens zwei segmentierten Nicht-Sprachsignale von der ersten Station an die zweite Station innerhalb eines Kanals, der eine Bandbreite im Wesentlichen gleich der Bandbreite des komprimierten Sprachsignals hat.

20. Verfahren nach Anspruch 19, bei dem der Verarbeitungsschritt ferner den Schritt des Kompandierens des Nicht-Sprachsignals umfasst.

21. Verfahren nach Anspruch 19, bei dem Sprach- und Nicht-Sprachsignal von einem Kommunikationsnetz geliefert werden.

22. Verfahren nach Anspruch 19, bei dem Sprach- und Nicht-Sprachsignal von wenigstens einer Benutzervorrichtung geliefert werden.

23. Verfahren nach Anspruch 19, bei dem das Nicht-Sprachsignal ein Telefaxsignal umfasst.

## Revendications

1. Première station (200 ; 300) destinée à être utilisée dans un système pour la communication sans fil de signaux vocaux et non-vocaux entre la première station (200 ; 300) et une seconde station (400), où ladite première station (200 ; 300) comprend :
un convertisseur de signal (202 ; 302) couplé à un réseau de communications pour convertir des signaux reçus sous forme numérique ;
un processeur de signal vocal (204 ; 304, 306) couplé au convertisseur de signal (202) pour produire un signal vocal compressé ;
un segmenteur de signal (208 ; 308) couplé audit convertisseur de signal (202 ; 302) pour segmenter un signal non-vocal pour former au moins deux signaux non-vocaux segmentés, chacun ayant une bande passante qui est inférieure ou égale à une bande passante du signal vocal compressé ;
un modem (210 ; 310) couplé audit processeur vocal (204 ; 304, 306) et audit segmenteur de signal (208 ; 308), pour transmettre sans fil ledit signal vocal compressé et au moins lesdits deux signaux non-vocaux segmentés à ladite seconde station.

2. Station selon la revendication 1 dans laquelle ledit signal non-vocal comprend un signal de télécopie.

3. Station selon la revendication 1 dans laquelle ledit modem (210 ; 310) reçoit un signal vocal compressé et une pluralité de signaux non-vocaux segmentés de ladite seconde station (400), ledit processeur de signal vocal (204 ; 304, 306) décompresse ledit signal vocal compressé reçu et ledit segmenteur de signal (208 ; 308) mélange lesdits signaux non-vocaux segmentés reçus pour former un signal non-vocal reçu.

4. Station selon la revendication 1 dans laquelle ledit convertisseur de signal (202) est un codec linéaire.

5. Station selon la revendication 1 dans laquelle ledit convertisseur de signal (302) est un modem numérique.

6. Station selon la revendication 5 dans laquelle ledit modem numérique reçoit et émet ledit signal vocal compressé et lesdits signaux non-vocaux segmentés simultanément.

7. Station selon la revendication 6 dans laquelle ledit processeur de signal vocal (304, 306) et ledit segmenteur de signal (308) fonctionnent simultanément.

8. Station selon la revendication 1 dans laquelle ledit processeur de signal vocal (204 ; 304, 306) comprend un compresseur-extenseur de signal vocal (204 ; 306).

9. Station selon la revendication 1 comprenant en outre un compresseur-extenseur (206) couplé audit convertisseur de signal (202) et audit segmenteur de signal (208).

10. Station selon la revendication 1 dans laquelle ledit segmenteur de signal (208, 308) est un séparateur de données.

11. Seconde station (400) destinée à être utilisée dans un système pour la communication sans fil de signaux vocaux et de télécopie entre une première station (200 ; 300) et la seconde station (400), où ladite seconde station (400) comprend :
un modem (410) pour recevoir un signal vocal compressé et au moins deux signaux de télécopie segmentés sans fil de ladite première station ;
un processeur de signal vocal (404), couplé audit modem (410), pour décompresser ledit signal vocal compressé pour former un signal vocal ;
un mélangeur de signal (408), couplé audit modem (410), pour mélanger au moins lesdits deux signaux de télécopie segmentés pour former un signal de télécopie, où ledit signal de télécopie a une bande passante qui est plus grande qu'une bande passante du signal vocal compressé ; et
un codec (402) pour coupler le signal de télécopie et le signal vocal à au moins un dispositif d'utilisateur.

12. Station selon la revendication 11 dans laquelle ledit processeur de signal vocal (404) compresse un signal vocal pour former un signal vocal compressé et ledit mélangeur de signal (408) segmente un signal de télécopie en une pluralité de signaux de télécopie segmentés, ayant chacun une bande passante qui est inférieure ou égale à une bande passante du signal vocal compressé.

13. Station selon la revendication 11 dans laquelle ledit processeur de signal vocal (404) et ledit mélangeur de signal fonctionnent simultanément.

14. Station selon la revendication 11 dans laquelle ledit processeur de signal (404) comprend un décompresseur de signal vocal.

15. Station selon la revendication 11 comprenant en outre un compresseur-extenseur (406) couplé audit convertisseur de signal et audit mélangeur de signal (408).

16. Station selon la revendication 11 dans laquelle ledit mélangeur de signal (408) est un mélangeur de données.

17. Station selon la revendication 11 dans laquelle lesdits dispositifs utilisateurs comprennent un combiné téléphonique et une machine de télécopie.

18. Système pour une communication sans fil de signaux vocaux et non-vocaux entre une station de base (200 ; 300) et une station distante (400), où ladite station de base (200 ; 300) comprend :
un convertisseur de signal (202 ; 302) couplé à un réseau de communications qui propage à la fois des signaux non-vocaux et vocaux ;
un processeur de signal vocal (204 ; 304, 306) couplé audit convertisseur de signal (202 ; 302), pour produire un signal vocal compressé ;
un segmenteur de signal (208 ; 308) couplé audit convertisseur de signal (202 ; 302), pour segmenter un signal non-vocal pour former au moins deux signaux non-vocaux segmentés, chacun ayant une bande passante qui est inférieure ou égale à une bande passante du signal vocal compressé ;
un modem (210 ; 310) couplé audit processeur de signal vocal (204 ; 304, 306) et audit segmenteur de signal (208, 308), pour émettre sans fil ledit signal vocal compressé et au moins lesdits deux signaux non-vocaux segmentés à ladite station distante (400) ;
et ladite station distante (400) comprend :
un modem (410) pour recevoir un signal vocal compressé et au moins les deux signaux vocaux segmentés de ladite station de base ;
un processeur de signal vocal (404), couplé audit modem, pour décompresser ledit signal vocal compressé pour former un signal vocal ;
un mélangeur de signal (408), couplé audit modem, pour mélanger au moins deux signaux non-vocaux segmentés pour former un signal non-vocal, où ledit signal non-vocal a une bande passante qui est plus grande qu'une bande passante du signal vocal compressé ; et
un codec (402) pour coupler le signal non-vocal et le signal vocal à au moins un dispositif utilisateur.

19. Procédé de communication entre une première station et une seconde station comprenant les étapes de :
compression d'un signal vocal pour former un signal vocal compressé ;
traitement d'un signal non-vocal pour segmenter ledit signal non-vocal en au moins deux signaux non-vocaux segmentés, chaque signal non-vocal segmenté ayant une bande passante qui est inférieure ou égale à une bande passante dudit signal vocal compressé ;
transmission sans fil dudit signal vocal compressé et au moins desdits deux signaux non-vocaux segmentés à partir de ladite première station à ladite seconde station dans un canal ayant une bande passante qui est substantiellement la même que la bande passante du signal vocal compressé.

20. Procédé selon la revendication 19 dans lequel ladite étape de traitement comprend en outre l'étape de compression-extension dudit signal non-vocal.

21. Procédé selon la revendication 19 dans lequel lesdits signaux vocaux et non-vocaux sont fournis par un réseau de communications.

22. Procédé selon la revendication 19 dans lequel lesdits signaux vocaux et non-vocaux sont fournis par au moins un dispositif utilisateur.

23. Procédé selon la revendication 19 dans lequel ledit signal non-vocal comprend un signal de télécopie.
